# EUROPEAN PATENT SPECIFICATION

(11) **EP 0 625 031 B1**
(45) Date of publication and mention of the grant of the patent: **29.04.1998**
(21) Application number: 93922617.1
(22) Date of filing: 17.09.1993
(51) Int. Cl.: A61C 8/00

(54) **360 DEGREES ROTATIONAL AND LOCKING SYSTEM FOR A PRE-ANGLED STUMP IN AN ORAL IMPLANTATION**
UM 360 GRAD ROTIERBARES UND VERRIEGELBARES SYSTEM FÜR EINEN IN EINEM WINKEL ANGEORDNETEN STUMPF EINES ORALEN IMPLANTATS
SYSTEME DE VERROUILLAGE ET DE ROTATION A 360o D'UN MOIGNON A ANGULARITE PRELIMINAIRE DANS UNE IMPLANTATION ORALE

(30) Priority: 24.09.1992 IT PN920071
(43) Date of publication of application: 23.11.1994
(73) Proprietor: ORALPLANT S.R.L., 33084 Cordenons (IT)
(72) Inventor: MORO, Sergio, I-33084 Cordenons (IT)
(74) Representative: D'Agostini, Giovanni, Dr.
(86) International application number: IT9300098
(87) International publication number: WO9406369

(56) References cited:
- EP-A- 0 323 421
- DE-U- 8 905 498
- US-A- 4 850 873

## Description

### Technical Field

In the field of oral implantation after having carried out the surgical phase for the insertion within the bone of the bi-phasic implants, after the recovery period, the prosthetic phase is carried out; to carry out this phase a stump that may be of different forms and sizes is applied to the osteointegrated implant.

### Background Art

When the problem arises that we are unable to obtain a correct and in line prosthesis with the anatomy of the mouth with a straight stump, we must resort to pre-angled stumps that allow different parallelism corrections. At present in trade there are pre-angled stumps that do not have the possibility to be oriented in any wanted position but, only in a few points that do not always ensure the perfect alignment of the prosthesis between stump and implant. This derives from the fact that the stump is fitted between the implant with a polygonal coupling, intending, for polygonal, any bevelling joint conformation, independent of the number of sides or of their conformation, including therefore toothing or grooving (E.g. See EP-A-0 323 421).

The problem of this invention is to allow the orientation of the stump in any position.

### Disclosure of Invention

The invention solves the problem by the implant system specified in claim 1.

The new locking implant for pre-angled stump, according to this invention, allows to orient the stump in any position. As claimed this implant is made up of four components:
1) locking screw;
2) sleeve with polygonal underside and conical cylindrical upperside having a maximum diameter in the upper part;
3) pre-angled stump, with axially conical hole perpendicular to the support base of the stump, for housing the conical sleeve;
4) implant, having the internal upper part composed from a polygonal seat for the precise coupling of the underside of the sleeve and a thread for the screwing of the locking screw.

The locking screw is inserted in the conical polygonal sleeve and these two components are inserted in the conical hole of the pre-angled stump in order that the polygonal part of the sleeve comes out of the base support of the stump. The complete stump, formed in this way, is coupled to the implant by inserting the protrusive polygonal part of the sleeve in the polygonal part of the implant and simultaneously tightening the locking screw on the internal thread of the implant until the support bases of the implant and of the stump are almost in contact with each other, therefore allowing the free rotation of the stump . Once the optimal orientation of the pre-angled stump is established, the locking screw is tightened fully until obtaining the locking of the conical coupling between the conical sleeve and stump with conical seat. In this way even if the locking screw became unscrewed and the stump became disconnected, the sleeve and the stump would remain blocked between them, allowing the replacement of the stump in the various proceedings for the realization of the prosthesis, keeping the same orientation previously fixed. With this implant, once the prosthesis is carried out, the stump is remitted in the implant tightening it with the locking screw, in the same position in which we found it before it became disconnected.

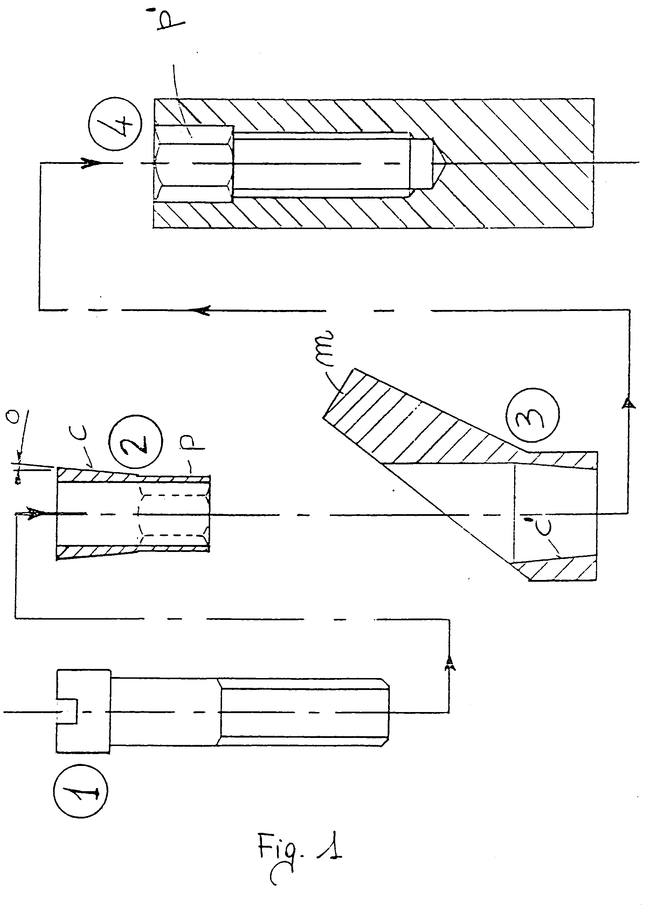

Figure 1 represents the system of the implant according to the invention, in which the continuous dotted with the arrow indicates the correct juxtaposition-superposition of the axial insertion of the four pieces that form the system of the implant going from bottom to top;
- implant to insert in the jaw (4);
- pre-angled stump (3) leaning axially on the upper part of the implant (4);
- graft sleeve between and within the two, for the axial connection (2);
- locking screw of the whole (1) acting on the sleeve (2) and screwing into the implant (4).

With this orientation locking system of the pre-angled stump able to rotate a possible 360°, this gives the physician the possibility to orient the tilting position of the stump to a point where it is retained most suitable for the perfect success of the prosthesis, thus avoiding them to work on the stump to adapt it necessarily, weakening the mechanical structure as with the present pre-angled stumps existing in trade.

## Claims

1. Implant system for oral implantation of an artificial tooth, comprising :
- a recessed implant (4), destined to be fixed in the bone of the jaw,
- a pre-angled body stump (3) fixable to the implant (4) in a certain position of rotational orientation, to support in the respective stump (3-m) a tilted tooth in respect to the axis of the implant (4),
- a clamping screw (1) of said stump (3) in the said implant (4) in a certain rotational position,
characterized by the fact that :
• said implant (4) has a blind hole with an upper polygonal portion (p');
• said stump (3) is axially connected to the said implant (4) by means of an intermediate coupling sleeve (2);
• said intermediate coupling sleeve (2) has:
- an external lower polygonal part (p) for the insertion in said polygonal portion (p') of said implant (4),
- and an upper external conical part (c) with a larger upper base (o),
- a through-hole for a clamping screw (1), which abuts onto the superior surface of said larger base (o);
• in said stump (3), there is a through-hole with a co-axial conical hole perpendicular to the support base surface of the stump, for housing in conical rotational-coupling action said correspondent conical portion (c) of said intermediate coupling sleeve (2).

## Patentansprüche

1. Implantationssystem für Implantation eines künstlichen Zahnes im Mund, mit:
- einer Vorrichtung mit Aussparung (4), die dazu bestimmt ist, im Kieferknochen befestigt zu werden,
- ein vorangewinkelter Körperstumpf (3), der an der Vorrichtung (4) in einer bestimmten Rotationsorientierungsposition anzubringen ist, um in dem betreffendem Stumpf (3-m) einen geneigten Zahn in bezug auf die Achse der Vorrichtung (4) zu stützen,
- einer Spannschraube (1) für besagten Stumpf (3) in der besagten Vorrichtung (4) in einer bestimmten Rotationsposition,
dadurch gekennzeichnet, daß:
• besagte Vorrichtung (4) ein blindes Loch mit einem oberen mehreckigen Teilstück (p') aufweist;
• besagter Stumpf (3) mit der besagten Vorrichtung (4) mittels einer Zwischenkupplungsmanschette (2) axial verbunden ist;
• besagte Zwischenkupplungsmanschette (2) hat:
- einen äußeren unteren mehreckigen Teil (p) für die Einfügung in besagtes mehreckiges Teilstück (p') der besagten Vorrichtung (4),
- und einen oberen äußeren konischen Teil (c) mit einer breiteren oberen Basis (o),
- ein Durchgangsloch für eine Spannschraube (1), die an die obere Oberfläche besagter breiteren Basis (o) stößt;
• in besagtem Stumpf (3) befindet sich ein Durchgangsloch mit einem koaxialen konischen Loch senkrecht zu der Stützenbasisoberfläche des Stumpfs, zum Unterbringen in konischer Rotationskupplung des besagten entsprechenden konischen Teilstücks (c) der besagten Zwischenkupplungsmanschette (2).

## Revendications

1. Système d'implantation pour l'implantation orale d'une dent artificielle, comprenant:
- un dispositif noyé (4), destiné à être fixé dans l'os de la mâchoire (4),
- une souche de corps préangulé (3) fixable au dispositif (4) dans une certaine position d'orientation rotative, pour supporter dans la respective souche (3-m) une dent penchée par rapport à l'axe du dispositif (4),
- une vis de serrage (1) de dite souche (3) dans ledit dispositif (4) dans une certaine position rotative,
caractérisé par le fait que:
• ledit dispositif (4) a un trou aveugle avec une portion polygonale supérieure (p');
• ladite souche (3) est axialement connectée audit dispositif (4) moyennant une chaussette d'accouplement intermédiaire (2);
• ladite chaussette d' accouplement intermédiaire (2) a:
- une partie polygonale inférieure externe (p) pour l' insertion dans ladite portion polygonale (p') dudit dispositif (4),
- et une partie conique externe supérieure (c) avec une base supérieure plus large (o),
- un trou de passage pour une vis de serrage (1), laquelle aboute sur la surface supérieure de ladite base plus large (o);
• dans ladite souche (3), il y a un trou de passage avec un trou conique co-axial perpendiculaire à la surface de base de support de la souche, pour loger en action d'accouplement rotatif conique ladite portion conique (c) correspondante de ladite chaussette d' accouplement intermédiaire (2).
